(19) Europäisches Patentamt
European Patent Office
Office européen des brevets

(11) Publication number: **0 651 945 A1**

(12) **EUROPEAN PATENT APPLICATION published in accordance with Art. 158(3) EPC**

(21) Application number: **93913481.3**

(51) Int. Cl.[6]: **A01N 47/40**, A01N 51/00

(22) Date of filing: **04.06.93**

(86) International application number: **PCT/JP93/00755**

(87) International publication number: **WO 93/25080 (23.12.93 93/30)**

(30) Priority: **11.06.92 JP 177395/92**

(43) Date of publication of application: **10.05.95 Bulletin 95/19**

(84) Designated Contracting States: **AT BE CH DE DK ES FR GB GR IT LI LU MC NL PT SE**

(71) Applicant: **NIPPON SODA CO., LTD.**
**2-1, Ohtemachi 2-chome**
**Chiyoda-ku,**
**Tokyo 100 (JP)**

(72) Inventor: **MATSUDA, Michihiko, Odawara Research Center**
**Nippon Soda Co Ltd,**
**345, Aza Yanagimachi,**
**Takada**
**Odawara-shi,**
**Kanagawa 250-02 (JP)**

Inventor: **HATANO, Renpei, Odawara Research Center**
**Nippon Soda Co Ltd,**
**345, Aza Yanagimachi,**
**Takada**
**Odawara-shi,**
**Kanagawa 250-02 (JP)**

Inventor: **YANO, Makio, Haibara Agricultural Research Lab.**
**Nippon Soda Co., Ltd.,**
**62-1, Sakabe,**
**Haibara-cho**
**Haibara-gun,**
**Shizuoka 421-04 (JP)**

(74) Representative: **de Bruijn, Leendert C.**
**Nederlandsch Octrooibureau**
**Scheveningseweg 82**
**P.O. Box 29720**
**NL-2502 LS Den Haag (NL)**

(54) **TERMITE-PROOFING AGENT.**

(57) A termite-proofing agent containing at least either a compound represented by general formula [I] or a salt thereof as the active ingredient, wherein $R_1$ represents pyridyl, pyrazinyl or thiazolyl each of which may be substituted; $R_2$ represents hydrogen, optionally substituted alkyl, cycloalkyl or alkoxy; $R_3$ represents hydrogen or optionally substituted alkyl; and $R_4$ represents cyano or nitro.

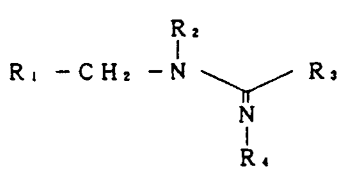

[I]

EP 0 651 945 A1

TECHNICAL FIELD :

The present invention relates to a termiticide comprising a amine derivative represented by general formula [I] as shown below or a salt thereof as the active ingredient.

BACKGROUND ART:

Many types of termiticide, such as organochlorine compounds, organophosphorous compounds, carbamate compounds, etc., have been used for the control of termites in the past, however, most of those termiticide have not been always satisfied in terms of their insufficient effectiveness and/or their high toxic property. Therefore, the development of novel termiticide which has less disadvantages as described above and is highly safe to human beings, has been intensively demanded.

It is an object of the present invention to provide a termiticide having firm effectiveness and capable of using it safely.

Disclosure of Invention:

The present invention is a termiticide containing at least either a compound represented by the general formula [I];

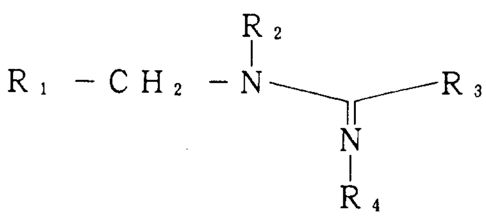

〔I〕

wherein $R_1$ represents optionally substituted pyridyl, optionally substituted pyrazinyl or optionally substituted thiazolyl; $R_2$ represents hydrogen, optionally substituted alkyl, cycloalkyl or alkoxy; $R_3$ represents hydrogen or optionally substituted alkyl; and $R_4$ represents cyano or nitro, or a salt thereof as the active ingredient.

For the examples of the amine derivatives of the invention represented by the general formula [I], there are recited several compounds in Table 1. The manufacturing process of the amine derivatives represented by the general formula [I] and the salts thereof, and the use of those as insecticides is disclosed in WO91/04965.

Table 1

| Compound No. | Chemical Structure 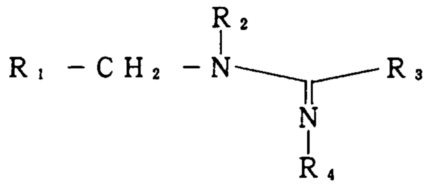 R1 | R2 | R3 | R4 | Physical Constant [ ]Melting Point ℃ |
|---|---|---|---|---|---|
| 1 | 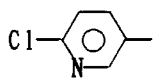 | H | $CH_3$ | CN | [141-143] |
| 2 | 〃 | $CH_3$ | 〃 | 〃 | [101-103] |
| 3 | 〃 | 〃 | $CH_2Cl$ | 〃 | $N_D^{26.5}$ 1.5921 |
| 4 | 〃 | $C_2H_5$ | $CH_3$ | 〃 | [100-101] |
| 5 | 〃 | $CH_2OCH_3$ | 〃 | 〃 | $N_D^{25.5}$ 1.5711 |
| 6 | 〃 | $CH_2C{\equiv}CH$ | 〃 | 〃 | $N_D^{25.5}$ 1.5730 |
| 7 | 〃 | $OCH_3$ | 〃 | 〃 | [110-112] |
| 8 | 〃 | 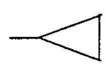 | 〃 | 〃 | [ 73-75 ] |
| 9 | 〃 | $CH_3$ | H | 〃 | [167-170] |
| 10 | 〃 | 〃 | $CH_3$ | $NO_2$ | $N_D^{25}$ 1.5808 |
| 11 | 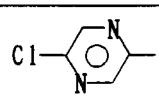 | $CH_3$ | $CH_3$ | CN | [ 94-96 ] |
| 12 | 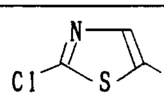 | 〃 | 〃 | 〃 | [143-144] |
| 13 | 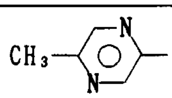 | 〃 | 〃 | 〃 | $N_D^{25}$ 1.5612 |

It is possible to control Isopterous insects such as termites, including Coptotermes formosanus Shiraki, Reticulitermes speratus Kolbe, Cryptotermes domesticus Haviland, Incisitermes minor Hagen, Odontotermes formosanus Shiraki, etc. by applying the amine derivative represented by the general formula [I] or the salt thereof against such termites.

The termiticide according to the present invention comprises a compound represented by the general formula [I] or the salt thereof as the active ingredient. The compound as the active ingredient can be applied without being subject to the formulation, however, it is normally used in the typical applicable form for this sort of agents, such as wettable powder, water soluble powder, dust formulation, emulsifiable concentrate, liquid, granular formulation, flowable formulation, paste, aerosol, fumigant and smoking generator. For additives and carriers, if solid formulations are required, plant-origin powder such as soybean powder and wheat flour, fine mineral powder such as diatomaceous earth, apatite, gypsum, talc, bentonite, clay, etc., and organic or inorganic compounds, such as sodium benzoate, urea and Glauber's salt can be used.

For liquid formulations, vegetable oils, mineral oils, distillate fractions of petroleum such as kerosene, xylene and solvent naphtha, cyclohexane, cyclohexanone, dimethylformamide, dimethylsulfoxide, trichloroethylene, methyl isobutyl ketone, water, etc. can be used as a solvent. In order to attain homogeneous and stable dilution, surfactant may be added, if required. The wettable powders, emulsifiable concentrates, water soluble powders and flowable formulations thus obtained may be sprayed after diluting them up to a desired concentration in suspension, solution or emulsion, while the dust and granular formulations may be sprayed directly.

The concentration of the active ingredient in the formulation and the dosage of the formulation to be applied may be determined adequately according to each of the type of formulation, application method and the objective variety of termites.

The content of the compound represented by the general formula [I] or the salt thereof as the active ingredient in the formulation is normally prepared in a range from 0.1 to 40 % by weight, preferably from 1 to 30 % by weight.

The termiticide according to the present invention can be applied in formulated or non-formulated form in such ways as coating, blowing, spraying, dipping, injecting under pressure, kneading, mixing, etc. to the termite-outbreaking sites and nests of termites, building materials such as foundations and posts, buildings, soil surrounding buildings, concrete blocks, floor slabs, coat materials for electric wires and various kinds of cables.

Despite single application of the compound represented by the general formula [I] or the salt thereof is sufficiently effective against termites, such compounds and their salts can be applied in combination with synergistic agent such as S-421 and piperonyl butoxide, insecticides, acaricides, fungicides and/or antiseptics.

Representative insecticides, acaricides, fungicides and antiseptics which can be used in combination with the compound specified in the present invention include the followings.

Organophosphorous and carbamate insecticides;

Fenthion, fenitrothion, diazinon, chlorpyriphos, ESP, vamidothion, fenthoate, dimethoate, formothion, malathion, trichlorfon, thiometon, phosmet, diclorvos, acephate, EPBP, methyl parathion, oxydimethon methyl, ethion, salithion, cyanophos, isoxathion, pyridafenthion, phosalone, methidathion, sulprophos, pyrachlophos, monocrotophos, fenamiphos, aldicarb, propoxur, methomyl, BPMC, MTMC, carbaryl, cartap, thiocyclam, bensultap, carbosulfan, benfuracarb, pyrimicarb, ethiofencarb, phenoxycarb, and thiodicarb.

Pyrethroid insecticides;

Permethrin, cypermethrin, deltamethrin, fenvalerate, fenpropathrin, pyrethrin, allethrin, tetramethrin, resmethrin, dimethrin, propathrin, bifenthrin, prothrin, fluvalinate, cyfluthrin, cyhalothrin, flucythrinate, ethofenprox, cycloprothrin, tralomethrin, and silafluophane.

Benzoylphenylureas and other insecticides;

Diflubenzuron, chlorfluazuron, triflumuron, teflubenzuron, hexaflumuron, triflumuron, flufenoxuron, buprofezin, pyriproxifen, diafenthiuron, machine oil, nicotine sulfate, and Bacillus thuringensis.

Acaricides (Fungicides);

Chlorobenzilate, fenithobromolate, dicofol, chlordimeform, amitraz, BPPS, benzomate, hexythiazox, fenbutatin oxide, polynactin, quinomethionate, CPCBS, tetradifon, avermectin, polysulfide lime, clofentezin, flubenzamin, flufenoxuron, cyhexatin, pyridaben, fenpyroximate, tebufenpyrad, thiaphanate methyl, benomyl,

thiuram, IBP, EDDP, fthalide, probenazole, isoprothiolane, TPN, captan, polyoxin, blastcidin-S, kasugamycin, validamycin, tricyclazole, pyroquilon, phenazine oxide, mepronil, flutolanil, pencycron, iprodione, hymexazol, metalaxil, triflumizol, diclomezin, teclofthalam, propineb, ziram, dithianone, fosetyl, triforine, vinclozolin, procymidon, oxadixyl, triadimefon, bitertanol, fenarimol, guazatin, propamocarb hydrochloride, and fluazinam.

Antiseptics;

Pentachlorophenyl laurate, p-bromo-2,6-dichlorophenol, 3-iodo-2-propinylbutylcarbamate, 3-ethoxycarbonyloxy-1-bromo-1,2-diiodopropene, benzalconium chloride, dialkyl dimethylammonium chloride, bis(n-tributyltin)oxide, tributyltin telefthalate, zinc aphtenate and xyligen alminium salt.

BEST MODE FOR CARRYING OUT THE INVENTION

Now, the examples of the formulation containing the inventive compound are described hereinbelow, however, carriers and surfactants to be combined thereto shall not be limited to the ones described in the following examples.

Example 1 : Emulsifiable Concentrate

Compound represented by general formula [I]

| | |
|---|---|
| or the salt thereof | 10 parts by weight |
| Alkylphenyl polyoxyethylene | 5 parts by weight |
| Dimethyl formamide | 50 parts by weight |
| Xylene | 35 parts by weight |

All of the above components are mixed and dissolved to obtain an emulsifiable concentrate, which is then prepared to emulsion by diluting it with water at the use and sprayed.

Example 2 : Wettable Powder

Compound represented by general formula [I]

| | |
|---|---|
| or the salt thereof | 20 parts by weight |
| Sulfuric acid ester of higher alcohol | 5 parts by weight |
| Diatomaceous earth | 70 parts by weight |
| Silica | 5 parts by weight |

All of the above components are mixed and micronized to obtain the fine powder, which is then prepared to suspension by diluting it with water at the use and sprayed.

Example 3 : Dust Formulation

Compound represented by general formula [I]

| | |
|---|---|
| or the salt thereof | 5 parts by weight |
| Talc | 94.7 parts by weight |
| Silica | 0.3 parts by weight |

All of the above components are mixed and pulverized to obtain dusting powder, which is then applied directly at the use.

Example 4 : Granular Formulation

Compound represented by general formula [I]

| | |
|---|---|
| or the salt thereof | 5 parts by weight |
| Clay | 73 parts by weight |
| Bentonite | 20 parts by weight |
| Sodium dioctylsulfosuccinate | 1 part by weight |
| Sodium phosphate | 1 part by weight |

All of the above components are granulated to obtain a granular formulation, which is then applied directly at the use.

INDUSTRIAL APPLICABILITY:

Test Example :

The emulsifiable concentrate according to the example 1 is diluted with acetone, then 1 ml of the solution was fed dropwise onto a filter paper placed in a glass petridish having a diameter of 9 cm. After drying naturally, 10 worker Coptotermes formosanus Shiraki were put in the petridish, and the petridish was closed with a cover and placed in an incubator maintained at 25 ° C. Two days later, the number of dead termites was counted and mortality was calculated. The results is summarized in Table 2.

Table 2

| Compound tested | Dose of Active Ingredient ($mg/m^2$) | Mortality (%) |
|---|---|---|
| 2 | 500 | 100 |
| 8 | 500 | 100 |
| 12 | 500 | 100 |
| Check | 0 | 0 |

**Claims**

**1.** A termiticide containing at least either a compound represented by the general formula [I];

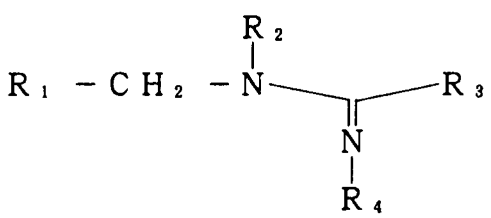

[ I ]

wherein $R_1$ represents optionally substituted pyridyl, optionally substituted pyrazinyl or optionally substituted thiazolyl; $R_2$ representshydrogen, optionally substituted alkyl, cycloalkyl or alkoxy; $R_3$ represents hydrogen or optionally substituted alkyl; and $R_4$ represents cyano or nitro, or a salt thereof as an active ingredient.

# INTERNATIONAL SEARCH REPORT

International application No.
PCT/JP93/00755

**A. CLASSIFICATION OF SUBJECT MATTER**

Int. $Cl^5$ A01N47/40, A01N51/00

According to International Patent Classification (IPC) or to both national classification and IPC

**B. FIELDS SEARCHED**

Minimum documentation searched (classification system followed by classification symbols)

Int. $Cl^5$ A01N47/40, A01N51/00

Documentation searched other than minimum documentation to the extent that such documents are included in the fields searched

Electronic data base consulted during the international search (name of data base and, where practicable, search terms used)

CAS ONLINE (Note: After structure retrieval by Reg. File, retrieve by CA, File)

**C. DOCUMENTS CONSIDERED TO BE RELEVANT**

| Category* | Citation of document, with indication, where appropriate, of the relevant passages | Relevant to claim No. |
|---|---|---|
| PA | JP, A, 4-360804 (Nippon Soda Co., Ltd.), December 14, 1992 (14. 12. 92), Claim; lines 20 to 39, column 2, page 3 to table 1, page 4 & WO, A1, 9221241 | 1 |
| A | JP, A, 4-154741 (Nippon Soda Co., Ltd.), May 27, 1992 (27. 05. 92), Claim; line 5, lower right column, page 28 to upper right column, page 33 & EP, A, 456826 & WO, A, 9104965 | 1 |

☐ Further documents are listed in the continuation of Box C. ☐ See patent family annex.

* Special categories of cited documents:

"A" document defining the general state of the art which is not considered to be of particular relevance

"E" earlier document but published on or after the international filing date

"L" document which may throw doubts on priority claim(s) or which is cited to establish the publication date of another citation or other special reason (as specified)

"O" document referring to an oral disclosure, use, exhibition or other means

"P" document published prior to the international filing date but later than the priority date claimed

"T" later document published after the international filing date or priority date and not in conflict with the application but cited to understand the principle or theory underlying the invention

"X" document of particular relevance; the claimed invention cannot be considered novel or cannot be considered to involve an inventive step when the document is taken alone

"Y" document of particular relevance; the claimed invention cannot be considered to involve an inventive step when the document is combined with one or more other such documents, such combination being obvious to a person skilled in the art

"&" document member of the same patent family

| Date of the actual completion of the international search | Date of mailing of the international search report |
|---|---|
| August 17, 1993 (17. 08. 93) | September 7, 1993 (07. 09. 93) |
| Name and mailing address of the ISA/ Japanese Patent Office | Authorized officer |
| Facsimile No. | Telephone No. |